# EUROPEAN PATENT APPLICATION

(11) **EP 3 315 334 A1**
(43) Date of publication of application: **02.05.2018**
(21) Application number: 17183728.9
(22) Date of filing: 28.07.2017
(51) Int. Cl.: B60G 5/02, A61G 5/04, A61G 5/10, A61G 5/12

(54) **SUSPENSION SYSTEM FOR ELECTRIC VEHICLE**

(30) Priority: 29.07.2016 IT 201600080128
(71) Applicant: Mountain Eagles S.r.l., 38040 Luserna (TN) (IT)
(72) Inventor: Ventura, Giovanni, 35026 Conselve (PD) (IT)
(74) Representative: Anselmi, Davide

(57) **Abstract**

An electric vehicle (1) for transporting persons on the ground comprising a support chassis (2) having a first lateral arm (3) and a second lateral arm (4) rotatably connected between one another at a same central axis of rotation (5) and at least two pairs of motorised wheels (8) in which each pair is connected at a respective lateral arm. In particular, the vehicle (1) comprises electric cables (14a) for supplying electricity to each motorised wheel in which each terminal end of a respective electric cable (14a) is connected to the respective electric motor (14) of the wheel (8) at an internal side (16) of the latter facing towards the support chassis (2).

## Description

The present invention relates to an electric vehicle for transporting persons on the ground.

In particular, the present invention relates to the sector of electric vehicles with four wheels for transporting a single person that are suitable for handling irregular surfaces (such as pavements, steps, uneven or dirt roads) and that are therefore also suitable to be used by disabled persons (but not only). Preferably, such electric vehicles are of the four-wheel drive type, but could also be two-wheel drive.

In accordance with the prior art, an example of such vehicle is described in document EP2536617 in which it is possible to note that the support chassis has two lateral portions (right and left) alongside one another and rotatably connected to a central support base.

At the front and rear ends of each lateral portion, respective wheels are arranged so that the connection between the two portions is comprised between the front and the rear wheels. By doing this, a movable system is created for the two portions, able to compensate for any obstacles found on the ground.

Furthermore, in order to promote the grip on the ground for overcoming obstacles, the vehicle comprises four wheels motorised with respective electric motors able to create an integral movement.

However, in the concrete implementations on the market to date, the vehicle comprises a fork for each wheel defining an upper arch and the cables that supply the electricity to the motor of the wheel follow such arch and are connected externally to the wheel.

Furthermore, the braking system also comprises four discs (one for each wheel) mounted externally to the wheel and therefore the conduits that supply the oil are also connected externally.

Such structure has some disadvantages related to the fact that:
- since the vehicle is built to travel on ground with obstacles it often happens that one of the obstacles interferes with the connection of the cables and the conduits to the wheel since they are external and therefore more exposed;
- in the case in which it is necessary to replace the wheel, it must be released from the fork (e.g. by unscrewing the bolts) and extracted according to a vertical direction downwards, hence having to lift the whole vehicle and perform difficult operations.

In this situation, the object of the present invention is to realise an electric vehicle for transporting persons on the ground that obviates the above-cited drawbacks.

It is in particular an object of the present invention to provide an electric vehicle that has a smaller number of parts exposed to external obstacles so as to be able to increase the overall strength of the vehicle.

It is yet another object of the present invention to provide an electric vehicle that allows the replacement of the wheels to be made easier, hence facilitating replacement operations.

The objects indicated are substantially attained by an electric vehicle for transporting persons on the ground according to what is described in the appended claims.

Further characteristics and advantages of the present invention will more greatly emerge from the detailed description of some preferred but not exclusive embodiments of an electric vehicle for transporting persons on the ground illustrated in the appended drawings, in which:
- figure 1 shows a lateral view of the electric vehicle for transporting persons on the ground according to the present invention;

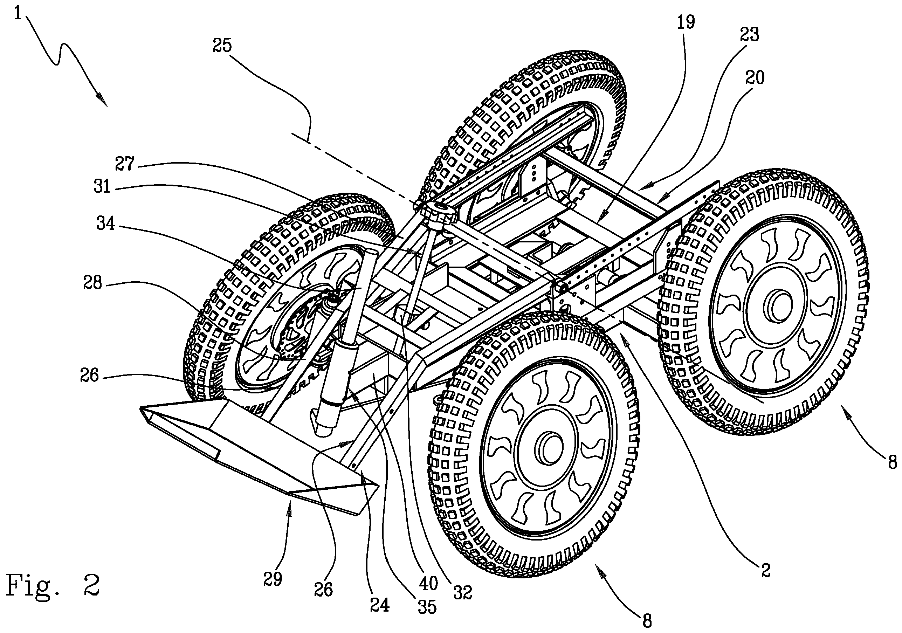

- figure 2 shows an axonometric view from above of the electric vehicle of figure 1 with some parts removed to better highlight others;

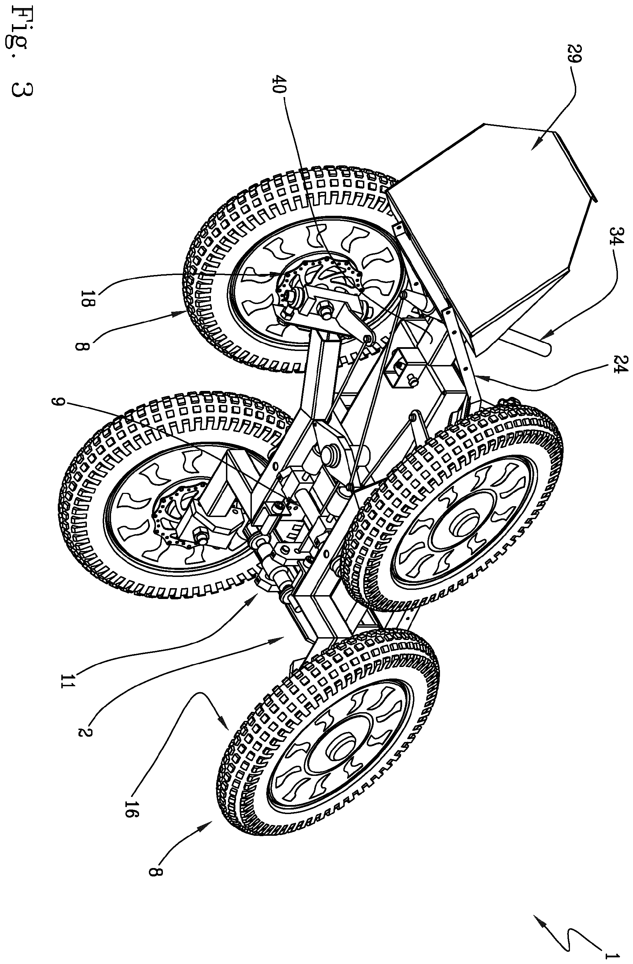

- figure 3 shows an axonometric view from below of the electric vehicle of figure 2;
- figure 4 shows a view from below of the electric vehicle of figure 2;
- figure 4a shows an axonometric view from below of an enlarged detail of figure 4;

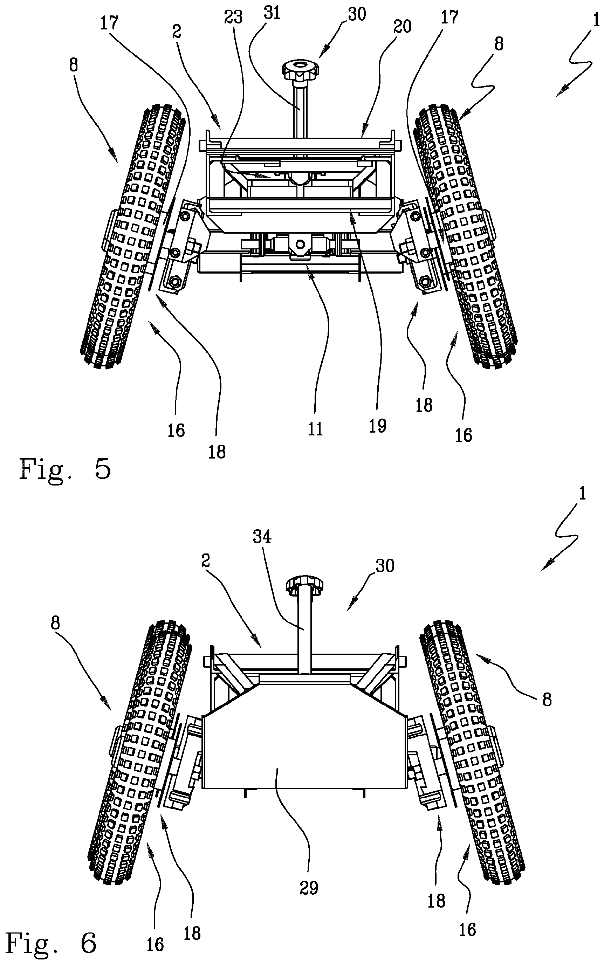

- figure 5 shows a rear view of the electric vehicle of figure 2; and
- figure 6 shows a front view of the electric vehicle of figure 2.

With reference to the figures mentioned, reference number 1 generally denotes an electric vehicle 1 for transporting persons on the ground according to the present invention.

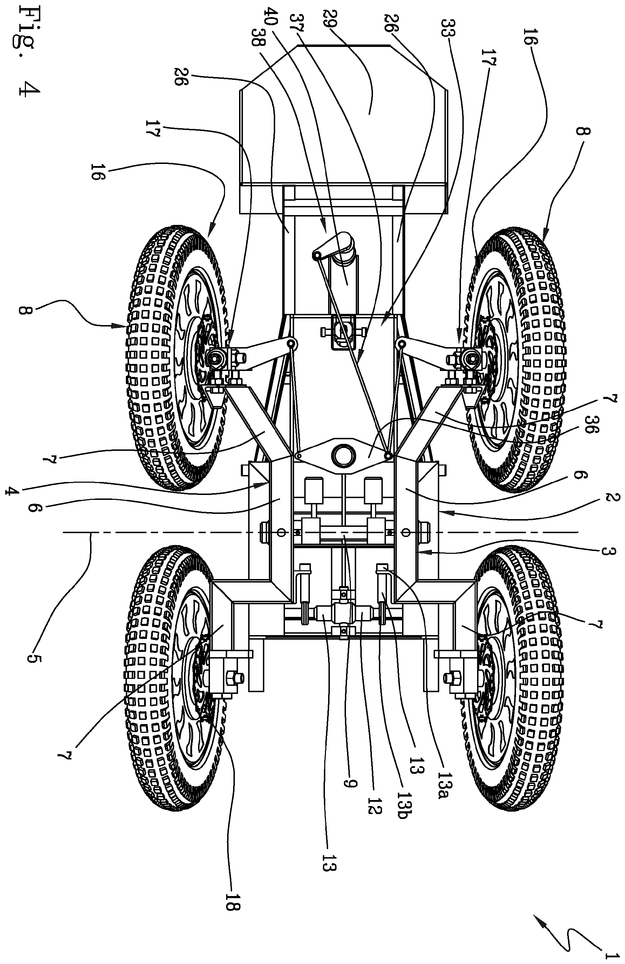

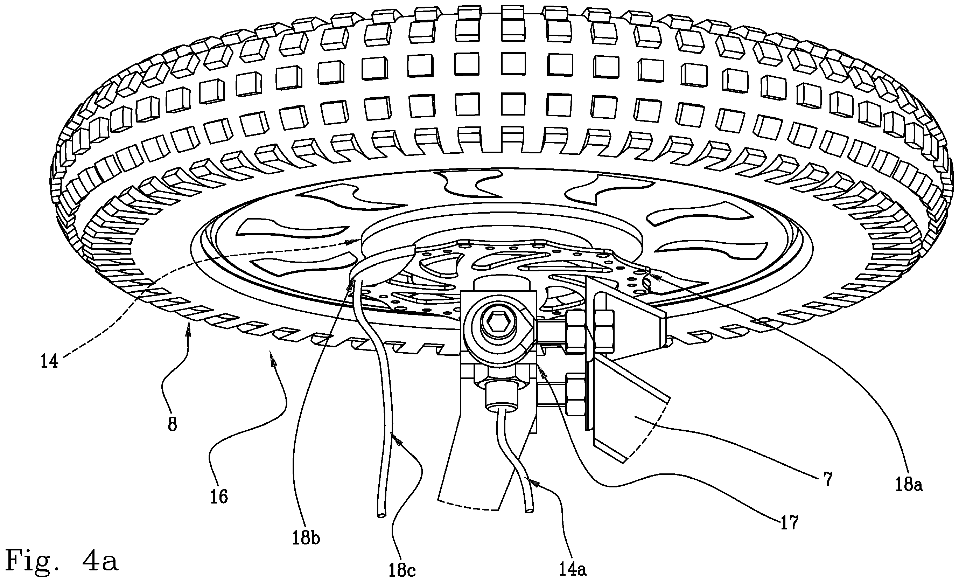

In particular, the electric vehicle 1 comprises a support chassis 2 comprising a first lateral arm (left) 3 and a second lateral arm (right) 4 rotatably connected to one another at a same central axis of rotation 5. In detail, as can be seen from figure 4, each lateral arm 3, 4 comprises a central portion 6 and two end portions 7. Each lateral arm is shaped so that the two central portions are closer with respect to the two end portions 7 that are spaced further apart from one another.

The central axis of rotation 5 passes through the central portions. The wheels 8 are instead connected to the end portions.

In detail, the support chassis 2 comprises a single central rod 9 passing through the two lateral arms 3,4 at the central portion 6 of the latter so as to connect the two arms 3,4 to one another. Furthermore, the support chassis 2 comprises two slots through which the central rod 9 is rotatably inserted.

In this way, each arm tilts with respect to the rest of the chassis 2 with respect to the central axis of rotation 5 defined by the central rod 9.

It is to be noted that the central axis of rotation 5 is perpendicular with respect to an advancement direction 10 of the vehicle. Furthermore, the central axis belongs to a horizontal plane parallel to the ground.

In addition, in figure 4 it can be seen that the support chassis 2 comprises a compensation system 11 for compensating ground level variations. Such compensation system 11 is preferably arranged upstream of the central axis of rotation 5 with respect to the advancement direction 10 of the vehicle 1. In other words, the compensation system 11 is closer to the rear wheels 8 with respect to the front ones.

The compensation system 11 comprises a bar 12 rotatably connected to the rest of the support chassis 2 according to an axis of rotation thereof which is perpendicular to the central axis of rotation 5 (and parallel to the advancement direction 10). Preferably, such bar 12 is rotatably connected to the rest of the support chassis 2 at a central portion of the bar itself. The ends of the bar 12 extend until they reach each of the two lateral arms 3,4 and are rotatably connected to the latter.

In relation to the latter connection, it is to be defined that the chassis 2 comprises two connecting elements 13 each of which is rotatably connected to a lateral arm 3, 4 at a first end 13a thereof (according to a parallel axis of rotation to the advancement direction 10) and is rotatably connected to the bar at a second end 13b thereof opposite the first, preferably through a spherical joint.

In this way, there is a lateral level compensation between the two front/rear arms 3,4 so that the vehicle 1 adapts to any type of ground.

Furthermore, as already mentioned, the vehicle 1 comprises two pairs of wheels 8 in which each pair is connected at a respective lateral arm 3, 4. For each pair of wheels 8, a front wheel 8 is mounted anteriorly with respect to the axis of rotation according to an advancement direction 10 of the vehicle 1, and a rear wheel 8 is mounted posteriorly with respect to the axis of rotation of the vehicle 1.

In other words, each pair of wheels 8 is connected to a respective lateral arm. Furthermore, the term "front wheels 8" defines the front wheels 8 of each pair, while the term "rear wheels 8" defines the rear wheels 8 of each pair according to the advancement direction 10 of the vehicle 1. The term "advancement direction 10" means the direction in which the vehicle 1 moves forwards (and not backwards).

Furthermore, the vehicle 1 comprises electric motors 14 each connected to a respective wheel 8 for being able to move it independently from the others. Preferably, in that way, the vehicle 1 has an integral traction (four-wheel drive).

In the preferred embodiment illustrated in the appended figures, the electric motor 14 is integrated into the respective wheel 8 (between the rim and the hub).

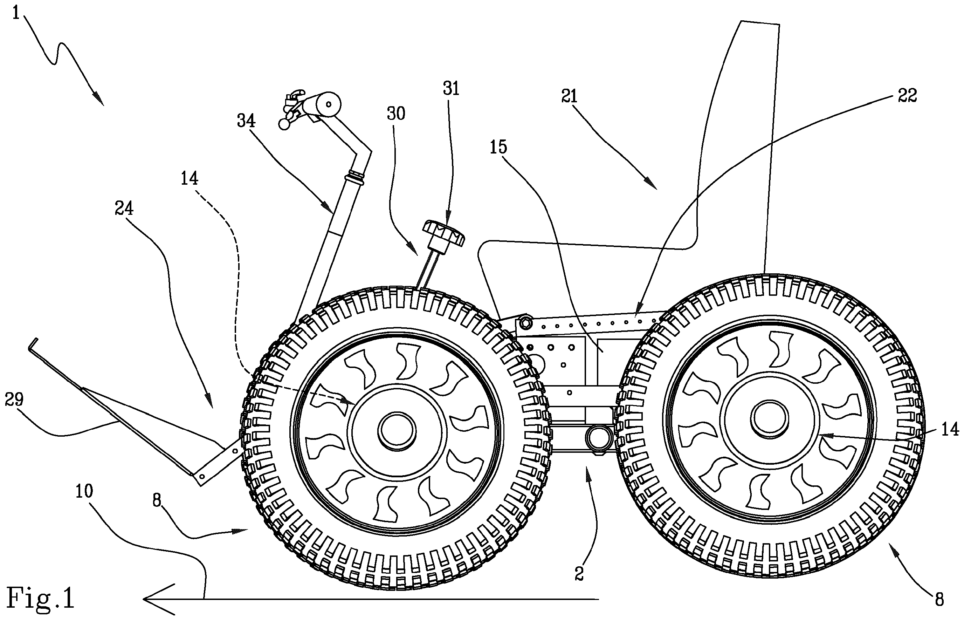

Furthermore, the vehicle 1 comprises an electrical energy supply system comprising:
- one or more electrical energy accumulators 15 mounted on the support chassis 2 (fig. 1);
- a plurality of electric cables each connected to the electric motor 14 of a respective wheel 8 for supplying electrical energy.

In accordance with the present invention, each terminal end of a respective electric cable 14a is connected to the respective electric motor 14 of the wheel 8 at an internal side 16 of the latter facing towards the support chassis 2 so as to reduce the parts projecting outside the vehicle 1.

In detail, each wheel 8 is connected to the relative lateral arm 3, 4 through a connection member 17 internally perforated within which the electric cable 14a passes for supplying electrical energy towards the inside of the wheel 8 and, precisely, towards the electric motor 14.

Furthermore, the electrical energy supply system also comprises a control unit for controlling electric motors 14 configured to synchronise the movement of the electric motors 14 between one another.

Furthermore, the vehicle 1 comprises a braking system comprising a plurality of braking elements 18 each connected to a respective wheel 8. Preferably, the braking system is connected to each wheel 8 so as to provide integral braking.

By way of example, in the embodiment illustrated in the appended figures each braking element 18 comprises a disc 18a (or another technically equivalent element such as a drum) and a gripper 18b operating on the disc for performing the braking action.

In accordance with the present invention, each braking element 18 is connected at the internal side 16 of the wheel 8. Furthermore, each conduit 18c or cable of the braking system supplying oil or movement is connected at the internal side 16 of the wheel 8 so as not to be exposed outside the latter.

It should also be noted that the support chassis 2 comprises a lower part 19 and an upper part 20 vertically spaced. Lateral arms 3,4 are connected to the lower part 19 while a housing station 21 for housing a user is connected to the upper part 20, substantially arranged between the two pairs of wheels 8.

Preferably, such housing station 21 comprises a chair having a seat and a back rest.

Furthermore, the housing station 21 is preferably slidably mounted on the upper part 20 and comprises an adjustment means 22 for adjusting the position of the station with respect to the support chassis 2 according to the user's requirements.

The housing station 21 comprises a seat substantially arranged at (preferably below) an imaginary horizontal plane resting above the wheels 8 (superiorly tangent to the wheels) so as to maintain a centre of gravity of the vehicle 1 that is sufficiently low with respect to the chassis 2.

It should also be noted that the accumulators 15 are arranged below the housing station 21 and are preferably arranged below the seat. In detail, the accumulators 15 are inserted between the lower part 19 and the upper part 20 of the chassis 2.

In this way, the accumulators 15 (which have a considerable weight that is about 15 kg) are positioned low down (considering that the lower part 19 extends horizontally and substantially at the same height as the centre of the wheels 8) so that the centre of gravity is maintained in order to provide greater stability for the vehicle 1.

In other words, the two lower and upper parts of the chassis 2 define a sort of compartment 23. The accumulators 15 are inserted in such compartment 23. Preferably, such compartment 23 is open at the back so as to be able to take out the accumulators 15 when necessary. Furthermore, the above-mentioned control unit is preferably arranged in such compartment 23 so as to maintain the electronic parts and the relative cables confined within the compartment 23.

Furthermore, the support chassis 2 comprises a front portion 24 tilting with respect to the rest of the support chassis 2 according to an axis of rotation 25 perpendicular to the advancement direction 10 so as to move towards or away from the ground.

Such front portion 24 is rotatably connected to the rest of the chassis 2 at a position arranged upstream of the axis of rotation of each front wheel 8 according to the advancement direction 10. In other words, the axis of rotation 25 of the front portion 24 is arranged upstream of the axis of rotation of each front wheel 8 according to the advancement direction 10. In the preferred embodiment illustrated in the appended figures, the front portion 24 comprises bars 26 extending according to the advancement direction 10 and spaced between one another laterally so that there is a gap between them. Such gap is occupied by an extension of the central arm 40 arranged between them and upstream of the most projecting end of the bars themselves so that the bars 26 are arranged laterally with respect to said central arm 40.

Preferably, each bar 26 comprises an upstream part 27 and a downstream part 28 (according to the advancement direction 10). In particular, the upstream part 27 is superimposed with the lower part 19 of the chassis 2 while the downstream part 28 projects therefrom in a cantilever fashion. In detail, the downstream part 28 is more inclined than the upstream part 27 with respect to a horizontal plane.

Furthermore, the vehicle 1 comprises a support footboard 29 for the user's feet mounted on the front portion 24. In particular, the support footboard 29 is mounted between the two parts downstream of each bar.

In addition, the vehicle 1 comprises an adjustment means 30 for adjusting the height of the footboard 29, active between the front portion 24 and the support chassis 2 so as to position the footboard 29 at different heights with respect to the ground. Preferably, such adjustment means 30 comprises a threaded bar 31 and a bolt 32 welded to the front portion 24. The threaded bar 31 is inserted into the bolt 32 and abuts against the part of chassis 2 fixed below.

It is also to be noted that the footboard 29 is inclined upwards so that the front part thereof is further distanced from the ground in order to prevent the vehicle 1 getting stuck at the front and pivoting in case of the presence of projecting obstacles.

Furthermore, the vehicle 1 comprises a steering system 33 operatively connected to the front wheels 8 to steer them. Such steering system 33 comprises a steering column 34 mounted on the chassis 2 and arranged upstream of the end of the front portion 24 that projects more towards the outside of the vehicle 1.

As can be seen from the figures, the steering column 34 comprises an upper part 20 connected to a driving handlebar, and a lower part 19 rotatably inserted in a hub 35 connected to the support chassis 2. Preferably, the steering column 34 is arranged between the two bars of the front portion 24 and the footboard 29. In detail, the steering column 34 is connected to the lower part 19 of the chassis 2.

In detail, the hub 35 is welded to the chassis 2 (lower part 19) and the steering column 34 is rotatably inserted in the hub 35.

The steering system 33 comprises a central plate 36 having two lateral portions connected to the wheels 8 through steering transmission bars 37. The central plate 36 is rotatable according to an axis of rotation that is equidistant from the two lateral portions so as to define a symmetrical steering system. Obviously, the lower end of the steering column 34 is connected to the central plate 36. In detail, the steering system 33 comprises a slider-crank member 38 connected at the lower end of the steering column 34 for transforming the rotary movement of the steering column 34 into a translational movement.

The upper part 20 of the steering column 34 can bend forwards with respect to the lower part 19 through a specific coupling/uncoupling means comprising a stop and a hinge for lateral movement. In particular, "bend forwards" means that the upper part 20 of the steering column 34 bends towards the footboard so as to make it easier for the user to get onto the housing station 21.

It is also to be noted that the wheels 8 have a negative camber with respect to the support chassis 2 so as to increase the stability of the vehicle 1.

The present invention reaches the set objects.

In particular, the present invention allows the mechanical and electrical parts exposed to the outside of the dimensions of the vehicle 1 to be reduced, against which obstacles of the external environment could cause damage. In fact, both the electric cables 14a and the cables/conduits 18c of the braking system are arranged on the internal side 16 of the wheels 8. Furthermore, the wheels 8 are connected to the chassis 2 by perforated hubs (not forks) inside which the electrical energy cables 14a can pass.

It is also to be noted that the chassis 2 comprises a single central rod 9 that connects the two lateral arms 3,4 (and no longer adjacent and parallel rods) so as to give greater rigidity to the chassis 2.

Furthermore, the vehicle 1 comprises accumulators 15 positioned below the driving seat so as to optimise the centre of gravity of the vehicle 1.

In addition, the vehicle 1 comprises a split chassis 2 and a movable front portion 24 to define an adjustable footboard 29 for supporting feet. In particular, the steering column 34 and the footboard 29 are mounted on different parts of the chassis 2 (the former is connected to the lower part 19 of the chassis 2 while the latter is mounted on the front part which, in turn, is connected to the upper part 20 of the chassis 2).

Furthermore, the steering system is symmetrical so as to obtain right and left steering of the same angle.

Also worthy of note is that the present invention is relatively easy to realise and also that the cost connected to the actuation of the invention is not very high.

## Claims

1. An electric vehicle (1) for transporting persons on the ground, comprising:
a support chassis (2) comprising a first lateral arm (3) and a second lateral arm (4) rotatably connected to one another at a same central axis of rotation (5);
at least two pairs of wheels (8) each pair connected at a respective lateral arm in which for each pair of wheels (8), a front wheel (8) is mounted anteriorly with respect to the axis of rotation according to an advancement direction (10) of the vehicle (1), and a rear wheel (8) is mounted posteriorly with respect to the axis of rotation of the vehicle (1);
at least two electric motors (14) each connected to a respective wheel (8) for being able to move it independently from the other;
an electrical energy supply system comprising a plurality of electric cables (14a) each connected to the electric motor (14) of a respective wheel (8) for supplying electrical energy; each terminal end of a respective electric cable (14a) is connected to the respective electric motor (14) of the wheel (8) at an internal side (16) of the latter facing towards the support chassis (2).
at least a housing station (21) for housing a user arranged on the support chassis (2) between the two pairs of wheels (8);
**characterised in that** said housing station (21) is arranged between the two pairs of wheels (8) and comprises a seat substantially arranged at an imaginary plane resting above the wheels (8) so as to maintain a sufficiently low centre of gravity of the vehicle (1) with respect to the chassis (2).

2. The vehicle (1) according to claim 1 wherein the support chassis (2) comprises a lower part (19) and an upper part (20) spaced vertically and arranged below the housing station (21) in which the lateral arms (3, 4) are connected to said lower part (19), while the housing station (21) is mounted on said upper part (20).

3. The vehicle (1) according to claim 2 wherein a compartment (23) is defined extending below the housing station (21) between the lower part (19) and the upper part (20) according to a substantially horizontal direction and having an access opening along said substantially horizontal direction.

4. The vehicle (1) according to any one of the preceding claims **characterised in that** the electrical energy supply system comprises accumulators (15) arranged between the support chassis (2) and the seat of the user's housing station (21).

5. The vehicle (1) according to claim 4 when dependant on the claim **characterised in that** said accumulators (15) are inserted within the compartment (23).

6. The vehicle (1) according to any one of the preceding claims **characterised in that** it comprises at least four electric motors (14) each connected to a respective wheel (8).

7. The vehicle (1) according to any one of the preceding claims **characterised in that** the electric motor (14) is integrated within the respective wheel (8).

8. The vehicle (1) according to any one of the preceding claims **characterised in that** it comprises a braking system comprising a plurality of braking elements (18) each connected to a respective wheel (8); each braking element (18) being connected at the internal side (16) of the wheel (8).

9. The vehicle (1) according to any one of the preceding claims **characterised in that** the support chassis (2) comprises a central connection rod (9) rotatably connected between the two lateral arms (3,4); said central connection rod (9) being rotatably connected to the rest of the support chassis (2) at an intermediate position between said lateral arms (3,4).

10. The vehicle (1) according to any one of the preceding claims **characterised in that** the support chassis (2) comprises a front portion (24) tilting with respect to the rest of the support chassis (2) according to an axis of rotation perpendicular to the advancement direction (10) so as to move closer or further away from the ground; said front portion (24) being rotatably connected to the rest of the chassis (2) at a position arranged upstream of the axis of rotation of each front wheel (8) according to the advancement direction (10).

11. The vehicle (1) according to claim 10 **characterised in that** said front portion (24) projects in a cantilever fashion to the rest of the chassis (2) and extends beyond the front wheels (8).

12. The vehicle (1) according to any one of claims 10 to 11 **characterised in that** the front portion (24) comprises two bars (26) extending according to the advancement direction (10) and spaced between one another laterally so that between them there is a gap in which a central arm (40) of the chassis (2) is arranged, positioned upstream of the end of the front portion (24) projecting further towards the outside of the vehicle (1).

13. The vehicle (1) according to claim 12 **characterised in that** it comprises a steering system (33) operatively connected to the front wheels (8) for making them steer; said steering system (33) comprising a steering column (34) mounted on said central arm (40) of the chassis (2).

14. The vehicle (1) according to claim 13 **characterised in that** the steering column (34) comprises an upper part (20) connected to a handlebar, and a lower part (19) rotatably inserted in a hub (35) connected to the support chassis (2); said upper part (20) being able to bend forwards with respect to the lower part (19) towards the advancement direction (10).

15. The vehicle (1) according to any one of claims 13 to 14 **characterised in that** the front portion (24) is mounted on a different part of the chassis (2) with respect to that on which the steering system (33) is mounted.

16. The vehicle (1) according to any one of claims from 10 to 15 **characterised in that** it comprises a support footboard (29) for supporting the user's feet mounted on said front portion (24) so that the movement of the latter defines an adjustment of the position of the footboard (29).
